Europäisches Patentamt

European Patent Office

Office européen des brevets

(11) Publication number: **0 304 775**
**A1**

## (12) EUROPEAN PATENT APPLICATION

(21) Application number: **88113298.9**

(22) Date of filing: **17.08.88**

(51) Int. Cl.⁴: **F24D 19/10 , G01F 1/56**

(30) Priority: **27.08.87 DK 4493/87**

(43) Date of publication of application:
**01.03.89 Bulletin 89/09**

(84) Designated Contracting States:
**AT BE CH DE ES FR GB GR IT LI LU NL SE**

(71) Applicant: **GRUNDFOS INTERNATIONAL A/S**
**7-11, Poul Due Jensensvej**
**DK-8850 Bjerringbro(DK)**

(72) Inventor: **Jensen, Niels Due**
**11, Poul Due Jensens Vej**
**DK-8850 Bjerringbro(DK)**
Inventor: **Van Alten, Jac**
**125, Gooilandseweg**
**NL-1406 LK Bussum(NL)**

(74) Representative: **Wilcken, Thomas, Dipl.-Ing. et**
**al**
**Musterbahn 1**
**D-2400 Lübeck(DE)**

(54) **Circulation pump with an integrated flow control device.**

(57) A circulation pump in the form of a wet-operating unit for an AC connection with an operational capacitor to be built in gas boilers. Previously a mechanically operated flow switch was usually inserted in the boilers. The switch interrupts the supply of fuel to the boiler when the flow has decreased to a minimum water flow. The present invention shows how to avoid flow switches, the ratio of the supply voltage to the voltage measured across the operational capacitor being utilized for determining the volume flow and for interrupting the supply of heat if the flow drops below the predetermined minimum value of the volume flow.

EP 0 304 775 A1

Fig.1

## Circulation pump with an integrated flow control device

The invention relates to a method of controlling a flow of heat-transferring fluid in a boiler system in order to interrupt the source of heat of the boiler if the flow drops to a value below a predetermined minimum flow, and where the fluid in said boiler system is circulated by a circulation pump comprising an electromotor with a main winding and a starter winding in series with an operational capacitor. Furthermore the invention relates to a circuit arrangement and a circulation pump for carrying out the method.

High-power boilers for hot-water heating have been developed during recent years, said boilers ensuring a substantial saving of energy. The high-power boilers differ from the earlier boilers by their compact structure, a lower loss of heat, and a lower water volume. However, the comparatively higher load of the heating surface and a lower thermal capacity of the high-power boilers require a minimum flow of water in order to prevent the boiler from being subjected to damages.

Low-power and medium-power gas boilers are preferably built as compact units, and in connection with such boilers a mechanically operated flow switch is usually mounted in the boiler. The flow switch is adapted to interrupt the supply of fuel to the boiler when the flow drops to a value below an allowed minimum water flow.

The flow switch does not only present a cost-involving factor, but is also encumbered with the drawback that its operational performance is affected by corrosion and impurities in the hot water.

The object of the invention is therefore to provide a replacement of the flow switch in the liquid flow and to provide a method for controlling the flow and being substantially simpler and less expensive than the known methods, and which at the same time is very reliable.

The method according to the invention is characterised in that the supply voltage of the motor and the voltage across the operational capacitor or predetermined fractions of said voltages are compared or related in order to determine whether or not the flow has dropped to a value below the predetermined minimum flow, a unique predetermined relation between the flow and the voltage ratio being utilized, and that the supply of energy to the source of heat is interrupted if the flow has dropped below the predetermined minimum flow. As a result it is possible by way of simple and reliable means to control the flow and thereby to protect the boiler against possible damages caused by an insufficient flow.

According to the invention an arrangement is provided for carrying out the above method, said arrangement being characterised by the features stated in claim 2.

A circulation pump for carrying out the method of the invention comprises an electromotor with a main winding and a starter winding in series with an operational capacitor, said pump being characterised in that the supply voltage of the electromotor is electrically connected to a first input of a flow control device, and that the voltage across the operational capacitor is electrically connected to a second input of the flow control device, said device being adapted to compare the two voltages or fractions thereof and to output a signal to an interrupting means if the voltage ratio exceeds a predetermined maximum value, whereby the interrupting means causes an interruption of the supply of energy to the source of heat of the boiler system. As a result the flow control device controls the flow in such a manner that the failure-susceptible flow switch is no longer necessary.

The flow control device can advantageously be combined with a circuit controlling a forced starting of the motor with the maximum torque, i.e. the torque is increased by recoupling the electric motor windings in such a manner that the pump is forced to start. This flow control device is furthermore preferably provided with a pump after-running circuit ensuring that the pump is kept running for a predetermined period after the interruption of the supply of energy to the heating unit of the boiler so as to ensure a cooling of the boiler.

The flow control device may advantageously be mounted in or on the pump such as in or on the electric terminal box of said pump. Thus the heating system need not be interfered with, as it is the case when a conventional flow switch is to be mounted.

The invention is described in greater detail below with reference to the accompanying drawings, in which

Figure 1 shows a circuit diagram of the motor windings in a pump with one rate of revolutions and combined with a circuit arrangement according to the invention,

Figure 2 shows a similar circuit diagram for a pump with three different rates of revolutions and combined with a circuit arrangement according to the invention,

Figure 3 shows a block diagram of an embodiment of a flow control device according to the invention,

Figure 4 shows a more detailed diagram of an embodiment of the flow control device of Figure 3,

Figure 5 shows curves illustrating the hydraulic height of lift H versus the volume flow Q as well as the voltage ratio $U_c/U$ also versus the volume flow Q for the pump of Figure 2 and with the rate of revolutions n as parameter,

Figure 6 illustrates an alternative embodiment of a control device according to the invention, and

Figure 7 shows a flow diagram of a programme for a $\mu P$.

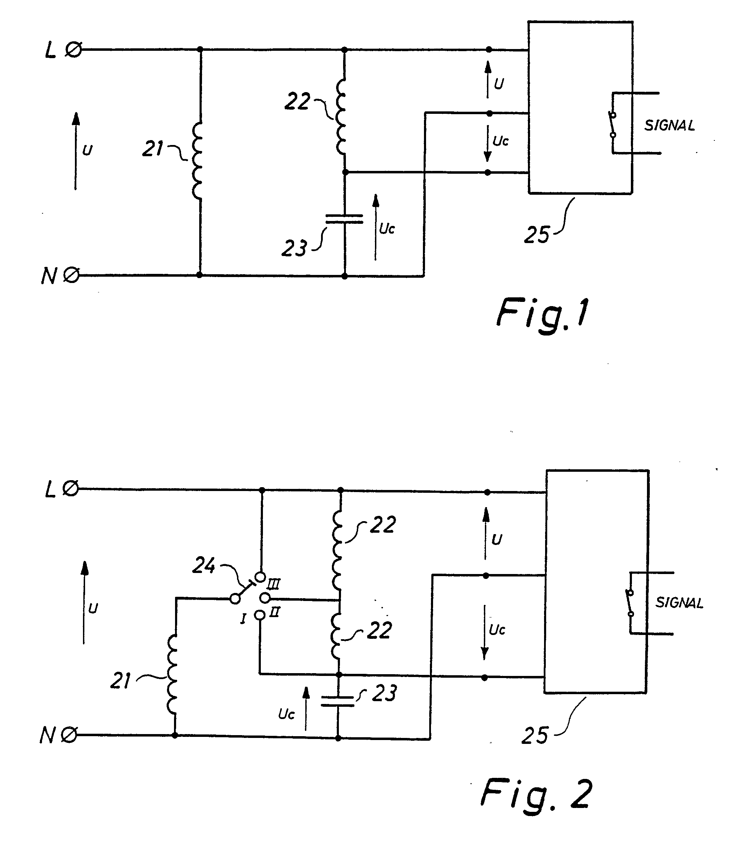

Figure 1 shows a circuit diagram of the windings in a motor with one rate of revolutions for a circulation pump including a circuit arrangement according to the invention. A voltage U across the terminals L and N is applied to the main winding 21 on the motor. The starter winding 22 and the operational capacitor 23 coupled in series therewith are arranged parallel to the main winding 21. The voltage $U_c$ is measured across the operational capacitor 23, said voltage varying in accordance with the load of the motor. Variations in the system voltage U have been compensated for by utilizing the ratio $U_c/U$ as a control parameter. The relation between the volume flow Q and the quotient $U_c/U$ has been found substantially to be defined by the following equation: $U_c/U = a - b$ multiplied by $Q^x$, where a and b are constants depending on the characteristics of the motor including the rate of revolutions n; and the exponent x depends primarily on the winding data of the motor. It appears from the equation that a unique relation exists between the volume flow Q and the quotient $U_c/U$ for a specific rate of revolutions. If the volume flow Q drops to a predetermined minimum value $Q_{min}$, the corresponding quotient $U_c/U$ increases to a maximum value. The two voltages U and $U_c$ are fed to a flow control device 25 comparing the voltages or fractions thereof and/or calculating the voltage ratio. If the comparisons and/or the voltage ratio indicate that the flow Q is insufficient, the control device outputs a signal for interrupting the supply of energy to the heating unit of the associated boiler system, for instance by interrupting the supply of fuel to the burner of the boiler system.

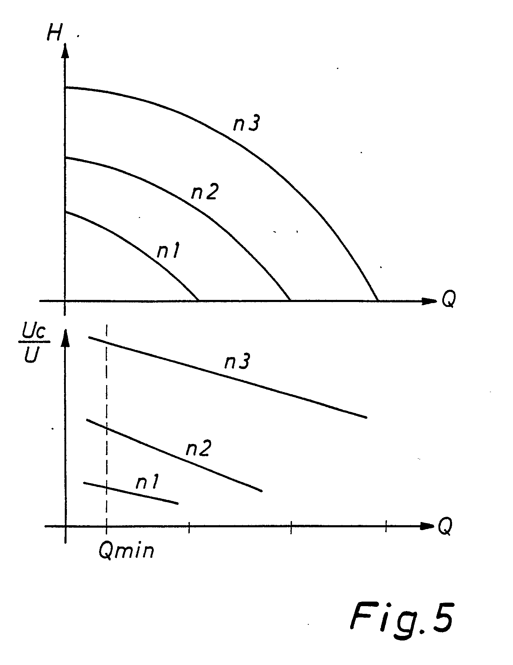

Figure 2 shows a similar diagram of a motor with a split starter winding 22 allowing three different rates of revolutions, said rates of revolutions being adjustable by recoupling the windings by means of a switch 24. As a result three curves indicating the height of lift versus the flow Q and three curves indicating the voltage ratio $U_c/U$ versus the flow Q are achieved, cf. Figure 5, viz. one curve for each rate of revolutions N1, N2, N3.

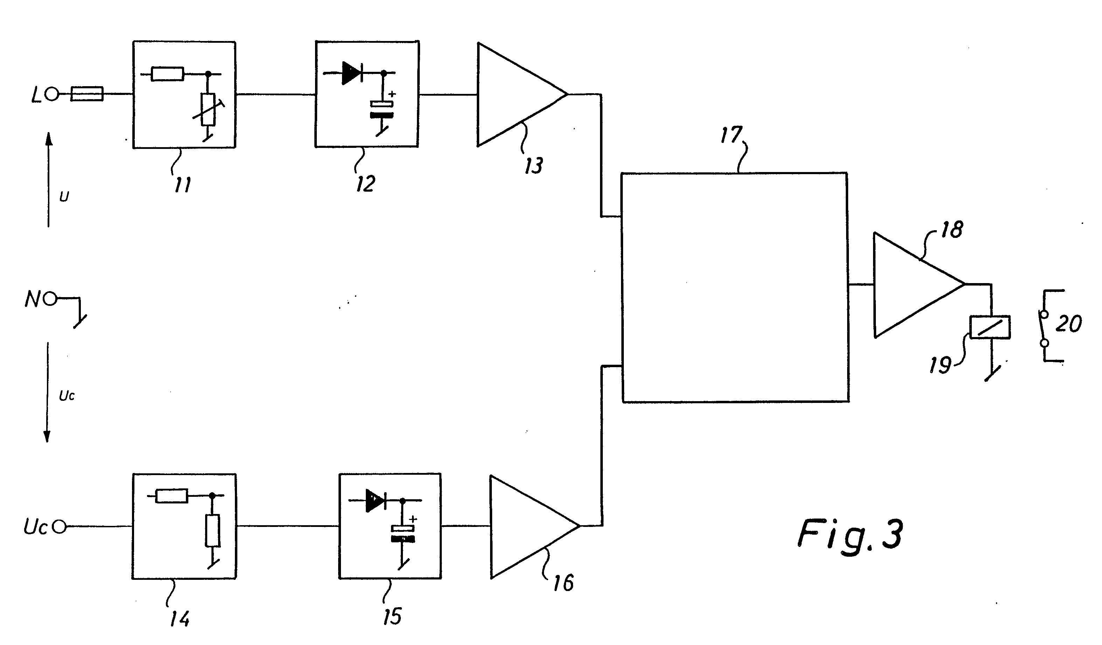

Figure 3 illustrates the structure of the electronic circuit constituting the flow control device. Both the system voltage U and the voltage $U_c$ are applied through their respective series resistances 11, 14, rectifiers 12, 15, and amplifiers 13, 16 to a comparing circuit 17 comparing U and $U_c$ or predetermined fractions thereof. When the quotient $U_c/U$ reaches a predetermined maximum value, the circuit outputs a signal preferably through an amplifier 18 to a relay 19. This relay 19 influences a switch 20 causing an interruption of the supply of energy to the associated boiler system.

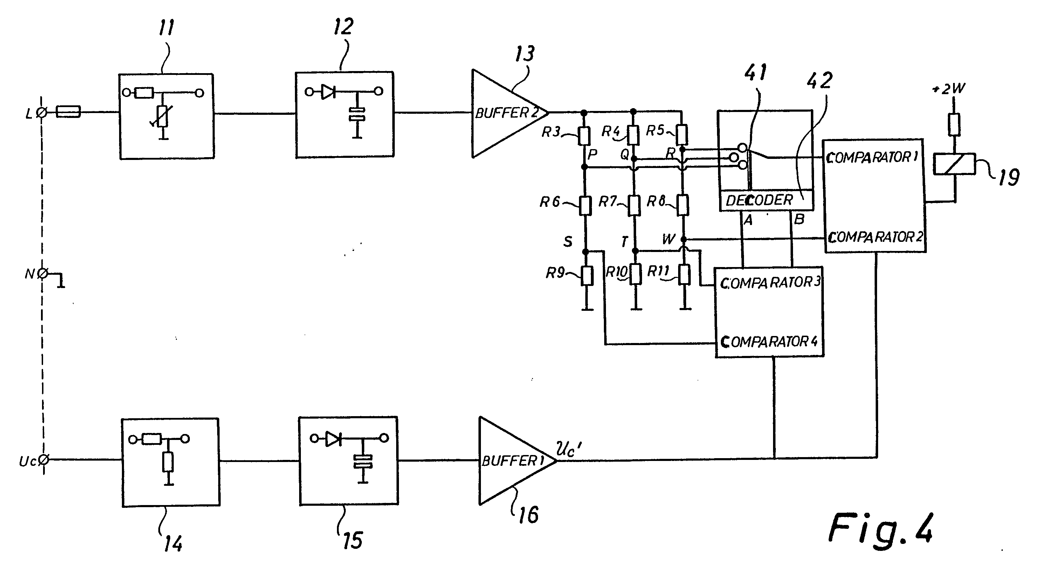

Figure 4 illustrates an example of a more detailed diagram of the electronic circuit for a motor, cf. Figure 2, with three different rate of revolutions. The same reference numerals have been used as in Figure 3, and only the parts forming the comparing circuit 17 are therefore described. The circuit comprises four comparators 1 to 4 coupled in such a manner that they compare the output voltage $U_c$, of the amplifier 16 with predetermined fractions of the output voltage of the amplifier 13, said first output voltage corresponding to the voltage $U_c$, and said second output voltage corresponding to the system voltage U. The outputs of the comparators 1 and 2 are coupled to a relay 19 capable of causing an interruption of the supply of fuel. The circuit comprises furthermore a decoder 42 capable of identifying the rate of revolutions based on the output voltages of the comparators 3 and 4. The decoder 42 sets a preferably electronic switch 41 according to the identified rate of revolutions. Finally three parallel series of resistors are provided. The top end of each series of resistors is connected to the output of the amplifier 13, and the bottom ends thereof are grounded. Each series of resistors corresponds to a specific rate of revolutions. Each series of resistors includes three resistors connected in series R3, R6, R9/R4, R7, R10//R5, R8, R11. The joint between R3 and R6 is denoted P, between R4 and R7 it is denoted Q, and between R5 and R8 the joint is denoted R. Correspondingly the joint between R6 and R9 is denoted S, between R7 and R10 it is denoted T, and between R8 and R11 the joint is denoted W.

The joints S, T, and W are connected to one input of their respective comparator, i.e. comparator 4, comparator 3, and comparator 2, respectively. At one input the comparator 1 is connected to the movable contact of the switch 41 having three stationary contacts. The stationary contacts are connected to their respective joints P, Q, and R in the series of resistors R3-R11. Thus the joints P, Q, R, S, T, and W include voltages corresponding to predetermined fractions of the system voltage U. The comparator 4 compares the voltage in the joint S with the output voltage $U_c'$ of the amplifier 16. The comparator 3 compares the voltage in the joint T with the output voltage $U_c'$ of the amplifier 16. The comparator 2 compares the voltage in the joint W with the output voltage of the amplifier 16. The comparator 1 compares the voltage in P, Q or R according to the position of the switch 41 with the output voltage $U_c$ of the amplifier 16. If the comparator 3 outputs a signal indicating that the output voltage $U_c'$ of the amplifier 16 exceeds the voltage in the joint T, and the comparator 4 outputs a signal indicating that $U_c'$ exceeds the voltage in the joint S, the latter means that the pump is running at the speed N3. Then the switch 41 uses the joint P between R3 and R6 as reference for the comparator 1. If the signal from the amplifier 16 is between the voltages in the joints S and T, which means that the comparator 3 outputs a signal indicating that $U_c'$ exceeds the voltage in T and the comparator 4 indicates that $U_c'$ is lower than the voltage in the joint S, the output signals from the two comparators for the decoder inputs A and B indicate that the motor is running at the speed N2, and the switch 41 is adjusted accordingly to connect the joint Q between R4 and R7 as reference for the comparator 1. If both comparators 3 and 4 indicate that $U_c'$ is below both voltages in the joints S and T, the speed is N1 and the decoder is adapted to adjust the switch 41 to the joint R as reference for the comparator 1. Thus the comparators 3 and 4 identify the rate of revolutions in order to determine which joint P, Q or R the comparator 1 refers to. The comparator 1 determines whether the flow is insufficient or not. Each rate of revolutions can thus have its own reference voltage in the joints P, Q or R determined by the choice of the resistors R3-R11. By the position of the switch in Figure 4 the reference R has been chosen, i.e. the motor is running at the speed N1, and the output voltage of the amplifier 16 must not exceed a predetermined value, viz. the voltage in the joint R. If the voltage in the joint R is exceeded, the system is encumbered with errors, such as an insufficient flow. Then the output voltage of the comparator 1 has the effect that the relay 19 is activated, i.e. it indicates the existence of an error and interrupts the supply of fuel for the burner. If the voltage in the joint W drops below the voltage $U_c'$, the latter is a further indication of an error irrespective of the operational speed. The output of the comparator 2 can therefore activate the relay 19 too. According to a further embodiment the relay 19 can be replaced by a light diode coupling optically to a separate interruption circuit known per se and therefore not shown.

Figure 5 illustrates the relation between the hydraulic height of lift H to the voltage ratio $U_c/U$ of a motor with three rates of revolutions N1, N2, N3. For the sake of simplicity the curves $U_c/U = f(Q)$ are indicated as straight lines although the latter does not usually apply in practice. Based on the quotient $U_c/U$ and the rate of revolutions it is possible to determine the flow Q. The circuit arrangement is preferably situated on the pump and for instance in or on the electric terminal box of the pump.

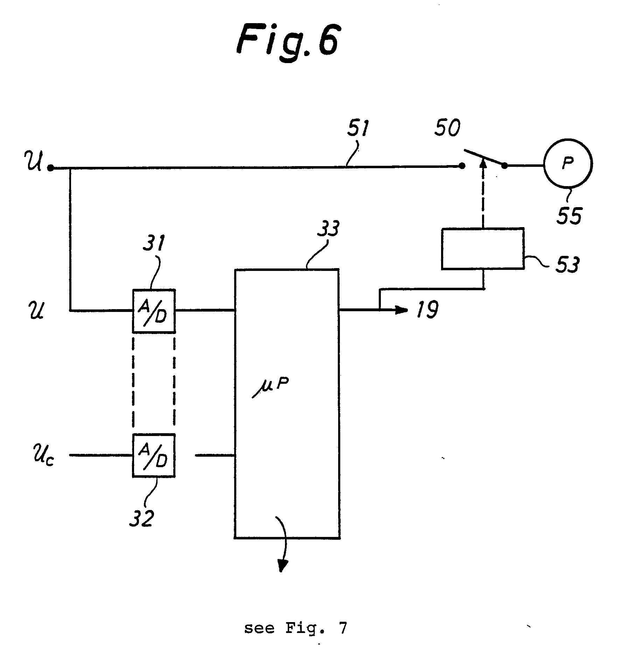

Figure 6 illustrates an alternative embodiment of a pump with only one rate of revolutions. The voltage signals U and $U_c$ are applied to one or two A/D converters 31, 32. Both voltage signals are converted into digital signals fed to a microprocessor 33. This microprocessor may for instance be adapted to execute the division $U_c/U$. If $U_c/U$ exceeds a predetermined maximum value indicating that the flow Q drops to a value below the allowed minimum flow $Q_{min}$, the microprocessor is adapted to output a signal causing an activation of a switch stopping the supply of fuel to the burner of the boiler system. According to a further alternative embodiment the flow amount Q can be calculated and compared directly with the predetermined allowed minimum flow amount. The flow amount Q can also be fed to an output gate on the microprocessor and transmitted to a digital signal reading or to an analogous display via a D/A converter.

When the source of heat of the boiler has been interrupted, the circulation pump can, of course, also be stopped. However, in order to avoid a damaging overheating of the boiler, the flow is preferably maintained for some time after the interruption of the burner of the boiler although said flow is insufficient. The latter can be achieved by inserting a time-delay circuit causing the circulation pump to be kept running for a predetermined period after the interruption of the burner. As an alternative the disconnection of the circulation pump can be made depending on the boiler temperature having dropped to a predetermined, suitably low temperature. The circuit arrangement according to the invention is therefore preferably combined with a circuit supplying the circulation pump with current for a predetermined period after the disconnection of the burner. Figure 6 illustrates an example of such a controlled, preferably electronic switch 50 in the wire 51 supplying the pump P with current. The switch 50 is activated through a time-delay circuit 53 receiving a signal from the output of the microprocessor 33 when the burner (not shown) is interrupted. The circuit arrangement is preferably also associated with an electric circuit capable of controlling the switch 24, cf. Figure 2, in such a manner that the windings 21, 22 of the motor are recoupled to the winding configuration providing the highest possible torque during the starting.

A detailed diagram of these circuits has not been illustrated as it is common knowledge to persons skilled in the art how to create such circuits. It is neither described how the microprocessor 33 can be programmed to execute the calculations and determinations as programming of microprocessors is common knowledge to persons skilled in the art.

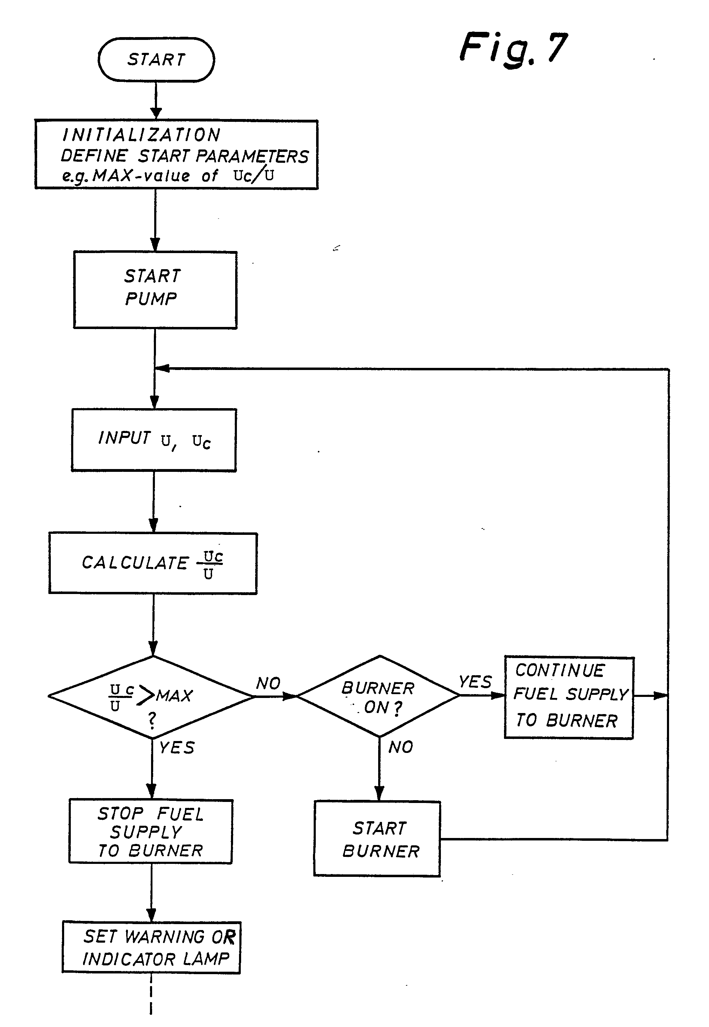

Figure 7 shows an example of a very simplified flow diagram of the program for a pump having only one rate of revolutions.

It is obvious to a person skilled in the art that such a flow control device can be realised in many ways. The essential feature of the invention is that the easily accessible voltages U, $U_c$ are used for achieving the information on the flow Q.

## Claims

A method of controlling a flow of heat-transferring fluid in a boiler system in order to interrupt the source of heat of the boiler if the flow drops to a value below a predetermined minimum flow, and where the fluid in said boiler system is circulated by a circulation pump comprising an electromotor with a main winding (21) and a starter winding (22) in series with an operational capacitor (23), characterised in that the supply voltage (U) of the motor and the voltage ($U_c$) across the operational capacitor (23) or predetermined fractions of said voltages are compared or related in order to determine whether or not the flow has dropped to a value below the predetermined minimum flow, a unique predetermined relation between the flow (Q) and the voltage ratio ($U_c/U$) being utilized, and that the supply of energy of the source of heat is interrupted if the flow (Q) has dropped below the predetermined minimum flow ($Q_{min}$).

2. A circuit arrangement for carrying out the method of claim 1, characterised in that it comprises means for detecting the motor supply voltage (U) and the capacitor voltage ($U_c$) or corresponding voltages, and means for comparing said voltages and/or means for determining the capacitor voltage-motor supply voltage ratio and/or for determining the corresponding flow (Q) or a value representing said flow, as well as means for interrupting the supply of fuel if the values determined represent a flow which is insufficient.

3. A circuit arrangement as claimed in claim 2, characterised in that it comprises an after-running circuit including a time delay circuit and means connected thereto for interrupting the voltage supply for the circulation pump a predetermined period after the interruption of the supply of fuel to the source of heat, or means for detecting the boiler temperature and delaying the interruption of the voltage supply for the circulation pump until the boiler temperature has dropped to an acceptable value.

4. A circuit arrangement as claimed in claim 2 or 3, characterised in that it comprises switching means for recoupling the windings of the motor to a coupling providing the largest possible torque during the starting.

5. A circulation pump for carrying out the method of claim 1 and comprising an electromotor with a main winding (21) and a starter winding (22) in series with an operational capacitor (23), characterised in that the supply voltage (U) of the electromotor is electrically connected to a first input of a flow control device (25), and that the voltage ($U_c$) across the operational capacitor (23) is electrically connected to a second input of the flow control device (25), said device being adapted to compare the two voltages or fractions thereof and to output a signal to an interrupting means if the voltage ratio ($U_c/U$) exceeds a predetermined maximum value, whereby the interrupting means causes an interruption of the supply of energy to the source of heat of the boiler system.

6. A circulation pump for carrying out the method as claimed in claim 1, characterised in that the supply voltage (U) of the electromotor is electrically connected to a first input of a flow control device (25), and that the voltage across the operational capacitor (23) is electrically connected to a second input of the flow control circuit (25), said device being adapted to calculate the capacitor voltage-motor supply voltage ratio ($U_c/U$) and/or the flow (Q), whereby said device causes an interruption of the supply of energy to the source of heat of the boiler system if the calculations indicate that the flow (Q) is insufficient.

7. A circulation pump as claimed in claim 5 or 6, characterised in that the flow control device (25) further comprises an after-running circuit comprising a controlled switch, the control input of which is connected through a time-delay circuit to the signal output (19) of the flow control device or is associated with a temperature sensor sensing the boiler temperature, and that the flow control device (25) in addition comprises a starter circuit for a forced starting, said starter circuit including a control circuit arranged to control a switch (24) for recoupling the windings (21, 22) of the motor to a coupling providing the maximum torque during starting.

8. A circulation pump as claimed in claim 5, 6 or 7, characterised by the flow control device (25) being mounted on the pump, for instance on or in the electric terminal box of the pump.

Fig.1

Fig. 2

Fig.3

Fig.4

EP 0 304 775 A1

Fig.5

# Fig.6

see Fig. 7

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 226 858 (WILO-WER GmbH & CO. PUMPEN-UND APPARTEBAU) * Abstract * | 1 | F 24 D 19/10 G 01 F 1/56 |
| A | PATENT ABSTRACTS OF JAPAN, vol. 11, no. 50 (M-562)[2497], 17th February 1987; & JP-A-61 213 422 (SANYO ELECTRIC CO., LTD) 22-09-1986 | 1 | |

| | | | TECHNICAL FIELDS SEARCHED (Int. Cl.4) |
|---|---|---|---|
| | | | F 24 D F 04 D G 01 F |

The present search report has been drawn up for all claims

| Place of search | Date of completion of the search | Examiner |
|---|---|---|
| THE HAGUE | 03-11-1988 | VAN GESTEL H.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)